# EUROPÄISCHE PATENTSCHRIFT

(11) **EP 0 609 177 B1**
(45) Veröffentlichungstag und Bekanntmachung des Hinweises auf die Patenterteilung: **16.04.1997**
(21) Anmeldenummer: 94810032.6
(22) Anmeldetag: 19.01.1994
(51) Int. Cl.: H04L 5/14, H04B 10/24

(54) **Verfahren und Einrichtung zur bidirektionalen Informationsübertragung (Full-Duplex).**
Method and apparatus for the bidirectional transmission of information (full duplex)
Procédé et dispositif pour la transmission bidirectionelle d'information (duplex intégral)

(30) Priorität: 26.01.1993 CH 222/93
(43) Veröffentlichungstag der Anmeldung: 03.08.1994
(73) Patentinhaber: Gut, Max B., Dipl.-Ing. ETH, 6353 Weggis (CH)
(72) Erfinder: Gut, Max B., Dipl.-Ing. ETH, 6353 Weggis (CH)
(74) Vertreter: OK pat AG

(56) Entgegenhaltungen:
- EP-A- 0 459 686
- EP-A- 0 521 253
- EP-A- 0 524 390
- US-A- 4 399 563
- PATENT ABSTRACTS OF JAPAN vol. 10, no. 205 (E-420) (2261) 17. Juli 1986 & JP-A-61 048 250 (TOSHIBA)

## Beschreibung

Die Erfindung betrifft ein Verfahren und eine Einrichtung zur bidirektionalen Informationsübertragung, wobei die Informationsübertragung zwischen Kommunikationspartnern durchgeführt wird, die je Sender und Empfänger aufweisen, und wobei die Informationen bitseriell übertragen werden und die Richtung der mationsflüsse umschaltbar ist.

Mittels solcher Verfahren kann zwischen Kommunikationspartnern, - wie beispielsweise einem Computer und einem Drucker - die nicht über Kabel miteinander verbunden sind, eine Informationsübertragung durchgeführt werden, wobei Infrarotlicht oder Funk als Uebertragungsmedium angewendet werden kann. Derartige Verfahren können auch im Zusammenhang mit Kommunikationsnetzwerken eingesetzt werden, wobei zwischen Kommunikationspartnern, die über Leiter im Netzwerk verbunden sind und solchen, die nicht über Leiter am Netzwerk angeschlossen sind, Informationen ausgetauscht werden können.

Für die bidirektionale Informationsübertragung werden hauptsächlich die Half-Duplex- und die Full-Duplex-Betriebsart angewendet, wobei der Full-Duplex-Betrieb der leistungsfähigere ist, da entgegengesetzt gerichtete Informationsflüsse gleichzeitig übertragen werden können und weder gestoppt noch zwischengespeichert werden müssen. Diese Betriebsart kann, obwohl wünschenswert und in vielen Fällen notwendig, bei Verfahren der eingangs genannten Gattung wegen der fehlenden Uebertragunsmittel nicht benutzt werden. Ein solches, aus der Literatur bekanntes Verfahren arbeitet daher mit Half-Duplex-Betrieb, wobei eine Zwischenspeicherung der zu übertragenden Daten angewendet wird. Sendet ein erster Kommunikationspartner ein Datenpaket und hat ein zweiter Kommunikationspartner während dieses Zeitraumes ebenfalls einen Uebertragungsbedarf, so speichert dieser zweite die zu übertragende Information und sendet sie erst nach Uebermittlungsende des ersten Kommunikationspartners. Charakteristisch ist bei der Half-Duplex-Betriebsart, dass die Richtungsumschaltung normalerweise erst am Ende eines Datenpaketes durchgeführt wird. Als Nachteil ist der prinzipiell notwendige, zusätzliche Aufwand für die Zwischenspeicherung der Information sowie für ein komplexeres Kommunikationsprotokoll zu erwähnen. Ebenso kann oft nicht im voraus abgeschätzt werden, wie lang der zu speichernde Informationsfluss maximal sein wird. Damit ist eine Bestimmung der Speicherkapazität nicht möglich, weshalb der Speicher weit über den durchschnittlichen Speicherbedarf dimensioniert werden muss. Ausserdem wird natürlich die Uebertragung entsprechend der Belegung des Mediums erheblich, jedoch unterschiedlich lange verzögert.

Es sind auch Verfahren zur bidirektionellen Datenübertragung digitaler Daten über eine Glasfaser bekannt geworden ( **EP-A- 0 521 253**), mit welchen die Daten der einen Übertragungsrichtung in Pausen der anderen Übertragungsrichtung übertragen werden. Dabei wird allerdings die Geschwindigkeit der Flüsse unverändert belassen. Die Bits müssen auf ein Viertel der ursprünglichen Länge verkürzt werden, um sicher zu sein, ohne wesentliche Synchronisation des einen Informationsflusses auf den anderen, die Information auf der Gegenseite noch empfangen zu können. Eine Verkürzung um mindestens den Faktor 4 bedeutet aber einen Verlust von Kanalkapazität von wenigstens 50%. Dies wird als sehr nachteilig angesehen.

Der Erfindung liegt die Aufgabe zugrunde, ein Verfahren und eine Einrichtung zur Durchführung des Verfahrens der eingangs genannten Art vorzuschlagen, das leistungsfähiger als ein mit Half-Duplex-Betrieb arbeitendes Verfahren ist, bei dem eine Zwischenspeicherung vermieden wird und das eine zuverlässige und rationelle Informationsübertragung ermöglicht.

Diese Aufgabe wird durch die in den unabhängigen Patentansprüchen 1 und 17 gekennzeichnete Erfindung gelöst.

Beim erfindungsgemässen Verfahren werden die in beiden Richtungen zu übertragenden Informationsflüsse auf die gleiche tragungsgeschwindigkeit gebracht. Der zeitliche Abstand zwischen den Anfängen der aufeinanderfolgenden Bits eines Informationsflusses wird während der Uebertragung in zwei zeitlich gleiche Hälften aufgeteilt, wobei die Bits während der ersten Hälfte übertragen werden. Ein sendender Kommunikationspartner schaltet unmittelbar nach dem Senden eines Bits auf Empfang um, wohingegen ein empfangender Kommunikationspartner nach dem Empfang eines Bits und bei Vorliegen von Uebermittlungsbedarf auf Senden umschaltet, derart, dass die gesendeten Bits des einen Informationsflusses jeweils in den zweiten Hälften des entgegengesetzt gerichteten Informationsflusses übertragen werden.

Gemäss einer besonderen Ausführungsform wird die beim vorgenannten Verfahren angewendete zeitliche Rasterung intern um zwei Bits über die eigentliche Länge eines übertragenen Charakters hinaus weitergeführt.

Die erfindungsgemässe Uebertragungseinrichtung zur Durchführung des Verfahrens ist durch die kennzeichnenden Merkmale des Patentanspruches 17 charakterisiert. In den abhängigen Ansprüchen 2 bis 16 bzw. 18 und 19 sind zweckmässige weitere Ausgestaltungen des Verfahrens bzw. der Einrichtung angegeben.

Die mit der Erfindung erzielten Vorteile sind darin zu sehen, dass eine Zwischenspeicherung der zu sendenden Daten nicht erforderlich ist, so dass Datenspeicher für diesen Zweck entfallen. Bei gleichzeitigem Auftreten beider Informationsflüsse muss nicht wie bei der Half-Duplex-Betriebsart einer der beiden Flüsse gestoppt werden, so dass das erfindungsgemässe Verfahren die Leistungsfähigkeit von Full-Duplex-Systemen erreicht. Die vorgeschlagene "Verschachtelung" der beiden entgegengesetzt gerichteten Informationsflüsse wird ohne Uebertragung von besonderen Synchronisierungs-Signalen erreicht. Eine Synchronisation bei Punkt zu Punkt-Verbindungen ist gemäss der oben erwähnten besonderen Ausführungsform trotz Existenz einer durch die Empfangsschaltung bedingten Verzögerung möglich, sofern immer ein Kommunikationspartner sendet. Ein weiterer Vorteil ist darin zu sehen, dass das Verfahren die Verwirklichung eines CSMA/CA-Protokolls für Punkt zu Multipunkt-Verbindungen erlaubt.

Im folgenden wird die Erfindung anhand eines Ausführungsbeispiels im Zusammenhang mit der Zeichnung näher erläutert.

Es zeigen:
- Fig. 1: die Prinzipdarstellung einer erfindungsgemässen Einrichtung mit zwei Kommunikationspartnern,
- Fig. 2: die Blockschaltbilder der Kommunikationspartner bei der Einrichtung gemäss Fig. 1,
- Fig. 3: ein Schaltschema eines Infrarot-Senders der Einrichtung,
- Fig. 4: ein Blockschaltbild einer Steuereinheit der Einrichtung,
- Fig. 5: Diagramme eines Informationsflusses in einer ersten, zweiten und dritten Geschwindigkeit,
- Fig. 6: Diagramme, die die zeitliche Verteilung von Bits und "unbenutzten" Zeitabschnitten eines zu übertragenden Informationsflusses zeigen,
- Fig. 7: ein Zeitdiagramm, welches das Zusammenwirken gesendeter und empfangener Bits zweier Kommunikationspartner veranschaulicht,
- Fig. 8: ein Zustandsdiagramm eines Schaltwerkes der Steuereinheit,
- Fig. 9: ein Zustandsdiagramm des Schaltwerkes für eine sendeseitige Abtasteinheit in der Steuereinheit,
- Fig. 10: ein Zustandsdiagramm des Schaltwerkes für einen Modulator in der Steuereinheit,
- Fig. 11: ein Zustandsdiagramm des Schaltwerkes für einen Empfangsteil in der Steuereinheit, und
- Fig. 12: ein weiteres Zustandsdiagramm des Schaltwerkes für eine empfangsseitige Abtasteinheit in der Steuereinheit.

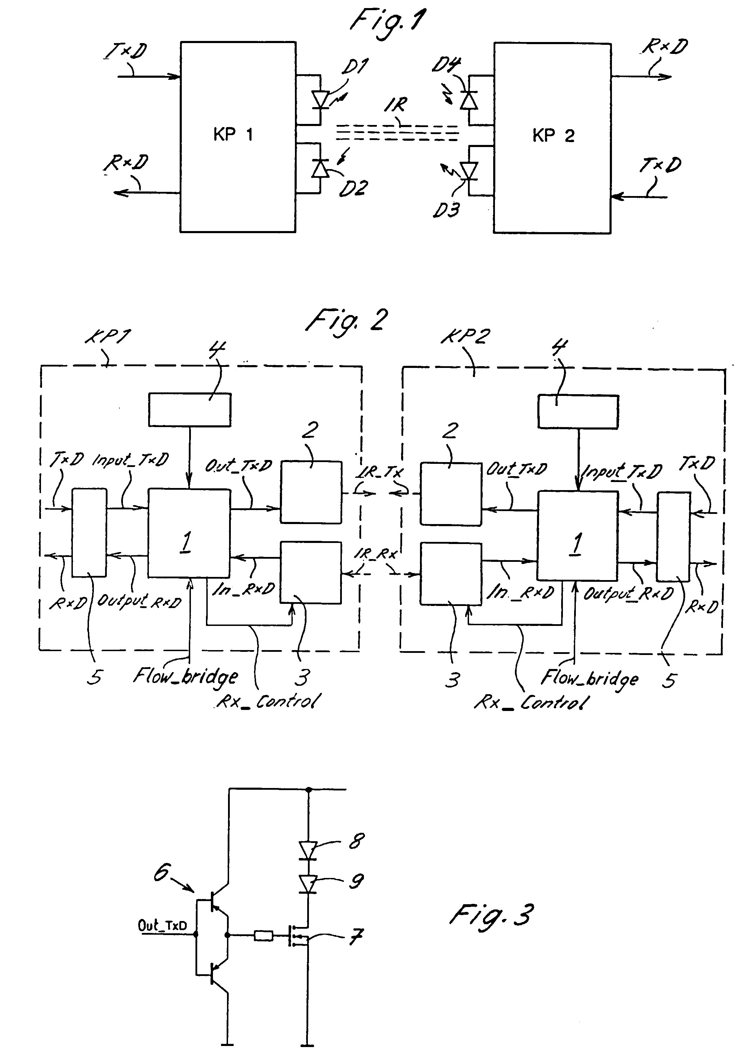

In der Fig. 1 sind mit KP1 und KP2 Kommunikationspartner, wie beispielsweise Computer oder andere intelligente elektronische Systeme, bezeichnet. Die Kommunikationspartner KP1, KP2 sind mit je einem Sender 2 und einem Empfänger 3 (Fig. 2) ausgestattet. Zum Zwecke der Informationsübertragung mittels Infrarotlicht IR weisen die Sender Leuchtdioden D1, D3 und die Empfänger Photodioden D2, D4 auf. Ueber Leitungen TxD werden zu sendende Informationen zugeführt und über Leitungen RxD empfangene Informationen weitergeleitet.

Gemäss Fig. 2 weist jeder Kommunikationspartner KP1, KP2 eine Steuereinheit 1 auf, die über eine Leitung Out_TxD mit dem Sender 2 und über eine Leitung In_RxD mit dem Empfänger 3 verbunden ist. An der Steuereinheit 1 ist ein Oszillator 4 angeschlossen, der ein Taktsignal mit einer Frequenz von beispielsweise 5,0688 MHz erzeugt. Ueber Leitungen Input_TxD und Output_ RxD steht die Steuereinheit 1 mit einem Spannungspegelwandler 5 in Verbindung, dem über die Leitung TxD die zu sendenden Informationen zugeführt werden und der über die Leitung RxD die empfangenen Informationen abgibt. Mit gestrichelten Pfeilen IR_Tx, IR_Rx sind die mittels Infrarotlicht zu übertragenden, gesendeten bzw. empfangenen Informationen symbolisiert. Ueber eine weitere Leitung Rx_Control ist der Empfänger 3 mit der Steuereinheit 1 verbunden. Mit Flow_bridge ist ein Eingang der Steuereinheit 1 bezeichnet, über welchen eine ebenso benannte, in der nachfolgenden Funktionsbeschreibung näher beschriebene Betriebsart aktiviert werden kann.

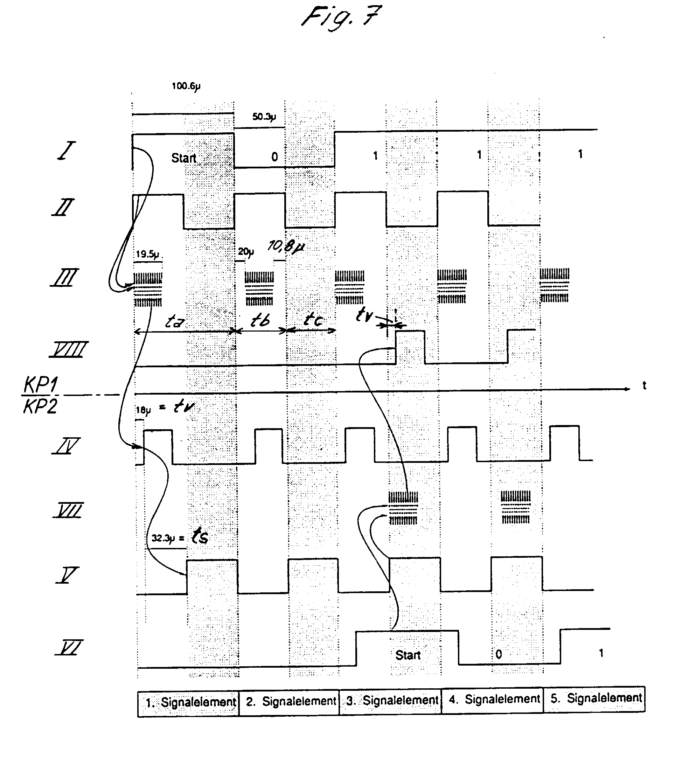

Der Sender 2 enthält gemäss Fig. 3 eine Treiberstufe 6, einen der Treiberstufe 6 nachgeschalteten Leistungs-FET 7 sowie zwei im Ausgangskreis angeordnete Leuchtdioden 8, 9. Ueber die mit dem Eingang verbundene Leitung Out_TxD werden dem Sender 2 von der Steuereinheit 1 binäre Signale zugeführt, wobei von den Leuchtdioden 8, 9 Schwingungspakete (Bursts) mit einer Frequenz von beispielsweise 460,8 kHz ausgesendet werden und die Schwingungspakete rechteckförmige, modulierte Wellenzüge bilden (IV, Fig. 7).

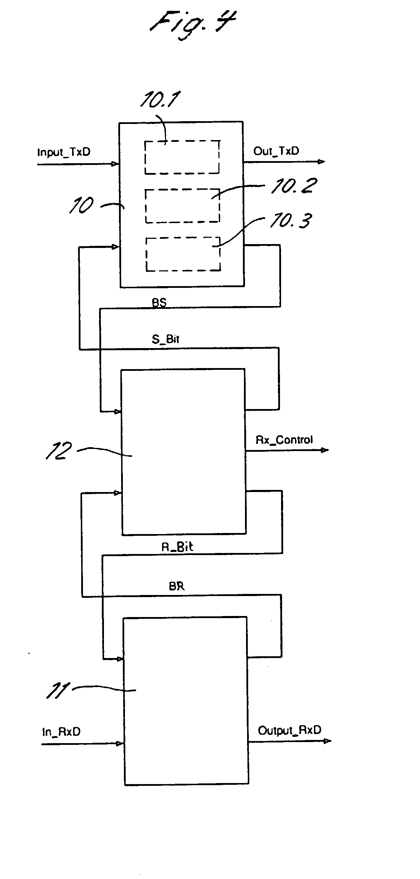

Gemäss Fig. 4 enthält die Steuereinheit 1 einen Sendeteil 10, einen Empfangsteil 11 und ein Schaltwerk 12 (state machine). Die Teile 10, 11 sind mit dem Schaltwerk 12 über Leitungen BS, S_Bit bzw. BR, R_Bit verbunden, wobei Sendeteil 10 und Empfangsteil 11 sendebezogene bzw. empfangsbezogene Aufgaben erfüllen und das Schaltwerk 12 die Funktion beider Teile 10, 11 koordiniert sowie Signale (Rx_Control) erzeugt, die für die Steuerung des Empfängers 3 notwendig sind. Der Sendeteil 10 enthält eine Abtasteinheit (Sample) 10.1, einen Modulator 10.2 und einen Multiplexer (Mux) 10.3.

In der Fig. 5 bedeuten:
- a: Ein bei einem ersten Kommunikationspartner KP1 mit einer ersten Geschwindigkeit ankommender, zu übertragender Informationsfluss (TxD, Fig. 2), der aus aufeinanderfolgenden Charakteren (Zeichen) besteht, die wie bekannt aus einem Startbit S1, acht Datenbits D0-D7, einem Paritybit PB und einem Stopbit S2 bestehen.
- x: Abtastzeitpunkte einer Abtasteinheit (10.1, Fig. 4), mittels welcher der ankommende Informationsfluss auf eine zweite, höhere Geschwindigkeit umgesetzt wird.
- b: Der zu übertragende Informationsfluss zweiter Geschwindigkeit.
- y: Abtastzeitpunkte der Abtasteinheit, mittels welcher ein von einem zweiten Kommunikationspartner KP2 empfangener Informationsfluss zweiter Geschwindigkeit auf eine dritte Geschwindigkeit umgesetzt wird.
- c: Der vom zweiten Kommunikationsparter KP2 abgehende Informationsfluss dritter Geschwindigkeit (RxD, Fig. 2), wobei die dritte Geschwindigkeit kleiner als die zweite ist und der nominellen Baud-Rate entspricht.

Die Abtastzeitpunkte x sind so gewählt, dass der Informationsfluss b mit der höchstzulässigen Baudrate (9938 Bd) übertragen wird. Hierbei ist für die Geschwindigkeit des ankommenden Informationsflusses a eine untere Grenze gesetzt, die wie folgt ermittelt wird: Wird ein erstes Bit S1 eines Charakters an seinem Ende abgetastet, so muss das letzte Bit S2 des gleichen Charakters gerade noch an seinem Anfang abgetastet werden können. Damit ist es möglich, einen Charakter bitweise und nicht charakterweise auf eine höhere Baudrate zu transformieren, was zu minmalen zeitlichen Verzögerungen führt. Die Abtastzeitpunkte y für die Rücktransformation von der zweiten auf die dritte Geschwindigkeit (nominelle Baudrate) sind so festgelegt, dass ein letztes Bit eines empfangenen Charakters an seinem Ende noch abgetastet werden kann, wenn das erste Bit an seinem Anfang abgetastet wird. Der vom ersten Kommunikationspartner KP1 in der einen Richtung und der vom zweiten Kommunikationspartner KP2 in entgegengesetzter Richtung laufende Informationsfluss sind plesiochron, d.h. sie haben die gleiche nominelle Geschwindigkeit.

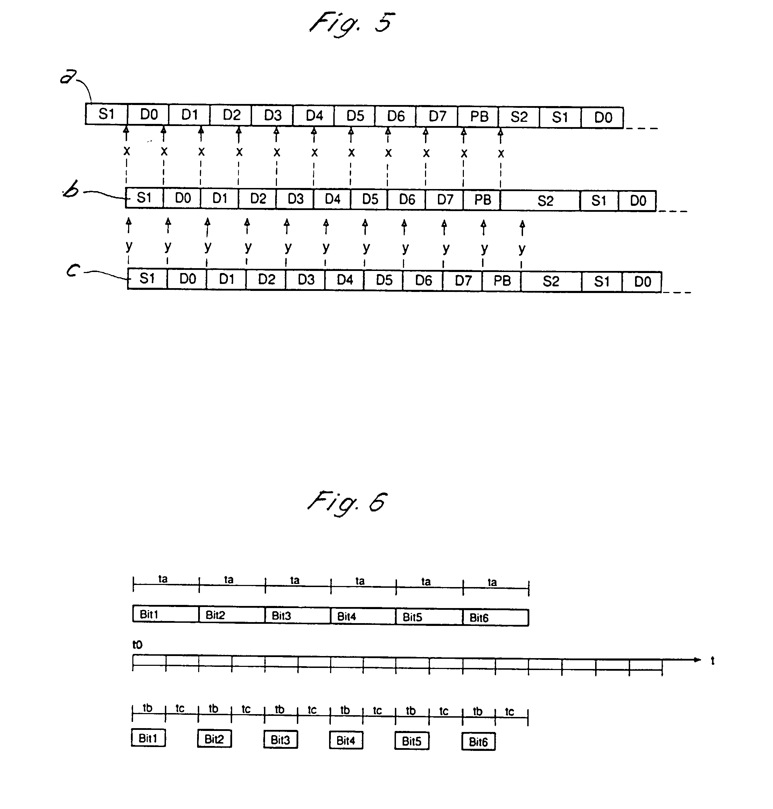

Gemäss Fig. 6 ist der zeitliche Abstand ta zwischen den Anfängen der aufeinanderfolgenden Bits eines Informationsflusses in zwei zeitlich gleiche Hälften tb, tc geteilt. Die Bits selbst sind verkürzt und werden nur während der ersten Hälfte tb übertragen, wobei die zweiten Hälften tc für den betreffenden Informationsfluss unbenutzte Zeiträume darstellen. Dadurch wird es möglich, dass zwei Kommunikationspartner gleichzeitig Informationen austauschen können, da die gesendeten Bits des einen Informationsflusses jeweils in den ersten Hälften tb und die Bits des entgegengesetzt gerichteten Informationsflusses jeweils in den zweiten Hälften tc übertragen werden. In der nachfolgenden Beschreibung wird für den zeitlichen Abstand ta auch die Bezeichnung "Signalelement" verwendet.

In der Fig. 7 bedeuten:
- I: Ein vom ersten Kommunikationspartner KP1 zu sendender plesiochroner Informationsfluss TxD1 (b, Fig. 5); für den zeitlichen Abstand ta ergibt sich bei einer Baudrate von 9938 eine Dauer von 100,6 µs und für die gleichen Hälften tb, tc je 50,3 µs.
- II: Ein beim ersten Kommunikationspartner KP1 erzeugtes Sendefreigabesignal En Tx1, dessen abfallende Flanken jeweils den zeitlichen Abstand ta in die zwei gleichen Hälften tb, tc teilen sowie das Senden sperren und den Empfang freigeben.
- III: Die vom ersten Kommunikationspartner KP1 ausgesendeten Bits in Form von Positions-modulierten Schwingungspaketen (Bursts).
- IV: Ein am Ausgang des Empfängers 3 des zweiten Kommunikationspartners KP2 erscheinendes Signal RxSig2 entsprechend den gesendeten Schwingungspaketen (III), jedoch um eine durch die Empfangsschaltung bedingte Verzögerung tv von ca. 18 µs verschoben.
- V: Ein beim zweiten (empfangenden) Kommunikationspartner KP2 vom Signal RxSig2 (IV) in der Weise abgeleitetes Sendefreigabesignal En Tx2, dass dessen steigende Flanke nach einer Synchronisationszeit ts von 32,3 µs ab dem mit der Verzögerung tv von 18 µs auftretenden Signal RxSig2 (IV) erscheint; die Synchronisationszeit ist so bemessen, dass sie mit der Verzögerung tv zusammen die Hälfte von ta ergibt: tv + ts = tb = tc. Wie bei En Tx1 (II) bewirken die steigenden Flanken, dass das Senden freigegeben und der Empfang gesperrt ist. Durch die Verschiebung um eine Hälfte tb bzw. tc gegenüber dem Sendefreigabesignal En Tx1 (II) werden bei Auftreten einer vom Kommunikationsparter KP2 zu sendenden Information die betreffenden Bits während der unbenutzten Zeiträume des Informationsflusses des Kommunikationspartners KP1 übertragen.
- VI: Ein vom zweiten Kommunikationspartner KP2 zu sendender, zu TxD1 (I) plesiochroner Informationsfluss TxD2 (b, Fig. 5) gleicher Baudrate. Ein entsprechender Charakter wird durch ein Startbit eingeleitet; dieses und die nachfolgenden Vorgänge des entgegengesetzt gerichteten Informationsflusses treten natürlich nur dann auf, wenn beim Kommunikationspartner KP2 gerade ein Uebermittlungsbedarf besteht.
- VII: Die vom zweiten Kommunikationspartner KP2 ausgesendeten Bits in Form von Schwingungspaketen (Bursts).
- VIII: Ein am Ausgang des Empfängers 3 des ersten Kommunikationspartners KP1 erscheinendes Signal RxSig1 entsprechend den gesendeten Schwingungspaketen (VII), jedoch um eine durch die Empfangsschaltung bedingte Verzögerung tv von ca. 18 µs verschoben.

Die Aussendung der Schwingungspakete (III, VII) erfolgt nach dem Prinzip der Pulsburstpositions-Modulation und wird vom Modulator 10.2 des Sendeteiles 10 (Fig. 4) gesteuert. Die Schwingungspakete bestehen jeweils aus neun Schwingungen und haben eine Länge von 19,5 µs, wobei das Schwingungspaket für die Kennzeichnung von logisch "1" unmittelbar am Anfang des zeitlichen Abstandes ta, das Schwingungspaket für die Kennzeichnung von logisch "0" dagegen um eine Verzögerungszeit von 20 µs nach Beginn von ta verschoben ausgesendet wird.

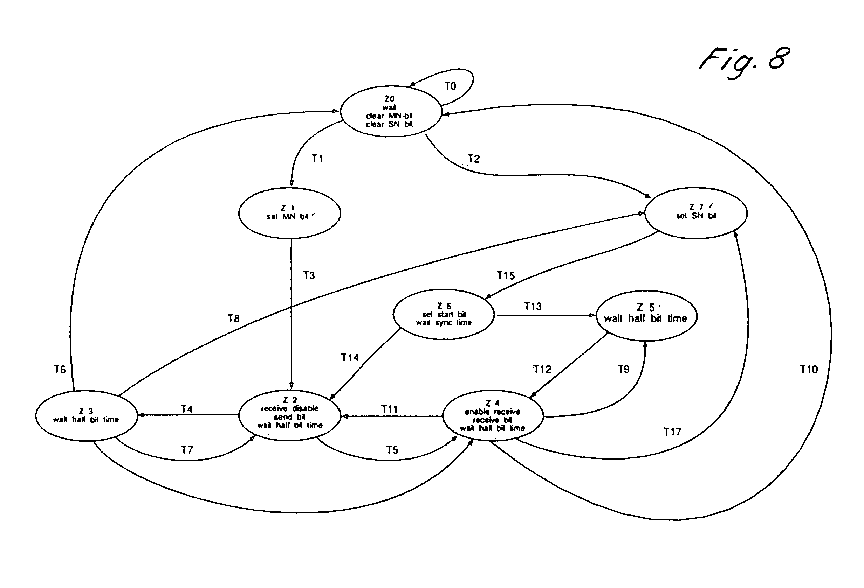

Die Arbeitsweise der Uebertragungseinrichtung wird im folgenden anhand der Zustandsdiagramme Fig. 8 bis 12 näher beschrieben, wobei mit Z0, Z1, Z2... die jeweiligen Zustände und mit T0, T1, T2... die Uebergänge (Transitionen) bezeichnet sind.

Der Sende- und Empfangsteil 10, 11 sowie das Schaltwerk 12 arbeiten in einer Handshaking-Betriebsweise zusammen (Fig. 4): Der Sendeteil 10 meldet mit einem BS Signal (Bit to send; Anfrage) dem Schaltwerk 12, dass aktuell ein Startbit auf der Leitung Input_TxD zugeführt wurde und nun die Bits des ankommenden Charakters zu übertragen sind. Das Schaltwerk 12 meldet aufgrund der aktuellen Timingsituation (Fig. 7) und des Gesamtsystem-Zustandes (Fig. 8) dem Sendeteil 10 mit einem Signal S_Bit (Send bit; Befehl), dass jetzt der Zeitpunkt für das Aussenden des Bits gegeben ist. In gleicher Art meldet der Empfangsteil 11 mit einem BR Signal (Bit received) dem Schaltwerk 12, dass er vom Empfänger 3 über die Leitung In_RxD ein Start-bit erhalten hat. Das Schaltwerk 12 steuert nun mit einem R_Bit Signal (Receive a bit) die aktuellen Empfangszeitpunkte der nächsten zu empfangenden Bits.

Das System möge sich im Zustand ZO befinden, wobei weder ein Bit zu empfangen noch ein Bit zu senden ist. Dieser Zustand wird auch immer nach power-up oder System-Reset erreicht. Sobald nun der Empfänger 3 ein Schwingungspaket erkennt, meldet er dies mit der steigenden Flanke auf der Leitung In_RxD. Dies ist das erste Signalelement in Fig. 7. Das Schaltwerk 12 übernimmt diese Information und geht, da angenommenerweise kein Bit aktuell zu senden ist, über die Transition T2 in den Zustand Z7 über. Hier setzt es ein nicht dargestelltes SN-Flip-Flop und markiert damit, dass dieser Kommunikationspartner (KP) jetzt ein empfangender Kommunikationspartner (EKP) ist. Ueber T15 erreicht das Schaltwerk alsdann Z6, wo das Startbit gesetzt wird und die Synchronisationszeit (32.3 µs, Fig. 7) abgewartet wird. Ueber die Transition T13 wird auf Z5 gesprungen. Hier wird eine halbe Signalementdauer (50.3 µs) gewartet. Während dieser Zeit würde dieser EKP ein erstes Bit aussenden, wenn die Notwendigkeit dazu gegeben wäre. Anschliessend wird über T12 (Wartezeit ist abgelaufen) in den Zustand Z4 gesprungen. Hier wird der Empfänger 3 (Fig. 2) aktiviert und ein erstes Datenbit während einer halben Signalementdauer empfangen. Dies ist das zweite Signalelement in Fig. 7. Falls auch nach Ablauf dieser Wartezeit noch keine Information zurück zu übermitteln ist (es ist kein Bit zu senden), wird über T9 in den Zustand Z5 zurückgesprungen und wiederum gewartet. Falls weiterhin keine Information durch den EKP zu senden ist, pendelt nun das Schaltwerk 12 in diesem Sinne zwischen den Zuständen Z5 und Z4 hin und her, bis der Charakter vollständig empfangen ist. Anschliessend wird in den Ruhezustand Z0 über T10 (es ist kein Bit zu senden und kein Bit mehr zu empfangen) zurückgesprungen. Das erwähnte SN-Flip-Flop wird hierbei wieder zurückgestellt, um damit zu markieren, dass je nach nächstem, erstankommendem Informationsfluss dieser KP ein empfangender KP (EKP) oder ein initiiender KP (IKP) werden kann.

Erscheint nun jedoch gemäss Beispiel nach Fig. 7 während dem Empfang des dritten Signalelementes ein Startbit (positive Flanke des Input_TxD- Signals), hat also der EKP jetzt auch einen Uebermittlungsbedarf, so wird das im Zustand Z4 erkannt und das Schaltwerk 12 verwendet anstelle der Transition T9 die Transition T11. Es gelangt damit in den Zustand Z2, wo es den eigenen Empfänger 3 ausschaltet und nun während der halben Signalementdauer Zeit hat, um die eigene Information zu übermitteln. Da nach dem Aussenden dieses Bits durch den EKP der Charakter vom IKP noch nicht vollständig übermittelt wurde, springt nun das Schaltwerk 12 über die Transition T5 zum Zustand Z4, wo im vierten Signalelement nun das Bit des IKP empfangen werden kann (Fig. 7). Solange jetzt sowohl IKP als auch EKP gleichzeitig jeweils ein Bit zu senden haben, pendelt das Schaltwerk 12 zwischen den Zuständen Z4 und Z2 hin und her.

Hat nun der IKP keinen Uebermittlungsbedarf mehr, der EKP aber noch, so wird das Schaltwerk 12 vom Zustand Z2 nicht mehr über T5 zu Z4 springen, wo noch ein Bit zu empfangen wäre, sondern es geht über T4 in den Zustand Z3 über, wo es an dessen Stelle diese halbe Signalelementdauer wartet, um anschliessend über T7 nach Z2 zurückzukehren und das nächste Bit zu senden. In diesem Sinne pendelt nun das Schaltwerk 12 des EKP zwischen den Zuständen Z2 und Z3 hin und her, bis auch der EKP kein Bit mehr zu senden hat. Anschliessend kehrt das Schaltwerk 12 über T6 in den Ruhezustand Z0 zurück.

Wäre nun der Fall eingetreten, dass der EKP nicht irgendwo innerhalb eines empfangenen Charakters selbst einen Uebermittlungsbedarf gehabt hätte, sondern dieser unmittelbar nach Empfang des Startbits vorhanden gewesen wäre, so hätte das Schaltwerk 12 nicht den Pfad Z0, T2, Z7, T15, Z6, T13 gewählt, sondern wäre anstelle aus Z6 zu Z5 über T14 nach Z2 gesprungen, wo das Bit dann unmittelbar schon im ersten Signalelement hätte ausgesendet werden können.

Befindet sich ein Kommunikationspartner in Ruhelage und hat als erster einen Kommunikationsbedarf (ohne vorher schon ein Bit empfangen zu haben), so springt das Schaltwerk 12 über die Transition T1 in den Zustand Z1 wo es ein zweites, nicht dargestelltes MN-Flip-Flop setzt. Der Kommunikationspartner wird damit zum IKP. Ueber die Transition T3 springt das Schaltwerk 12 in den Zustand Z2, wobei der IKP das erste Bit (erstes Signalelement) sendet und das Schaltwerk 12 anschliessend zwischen den Zuständen Z2 und Z3 pendelt. Wenn der IKP später ebenfalls ein Bit zu empfangen hat, verschiebt sich der Pendelvorgang zu den Zuständen Z2 und Z4. Wenn er in einer weiteren Phase nur noch zu empfangen und nichts mehr zu senden hat, erfolgt ein Pendeln zwischen den Zuständen Z4 und Z5. Je nachdem, ob der letzte Vorgang das Senden oder das Empfangen eines Bits ist, wird über T6 bzw. T10 in den Wartezustand zurück gesprungen. Die Uebergänge T8 und T17 ermöglichen die Verwirklichung einer "Flow bridge".

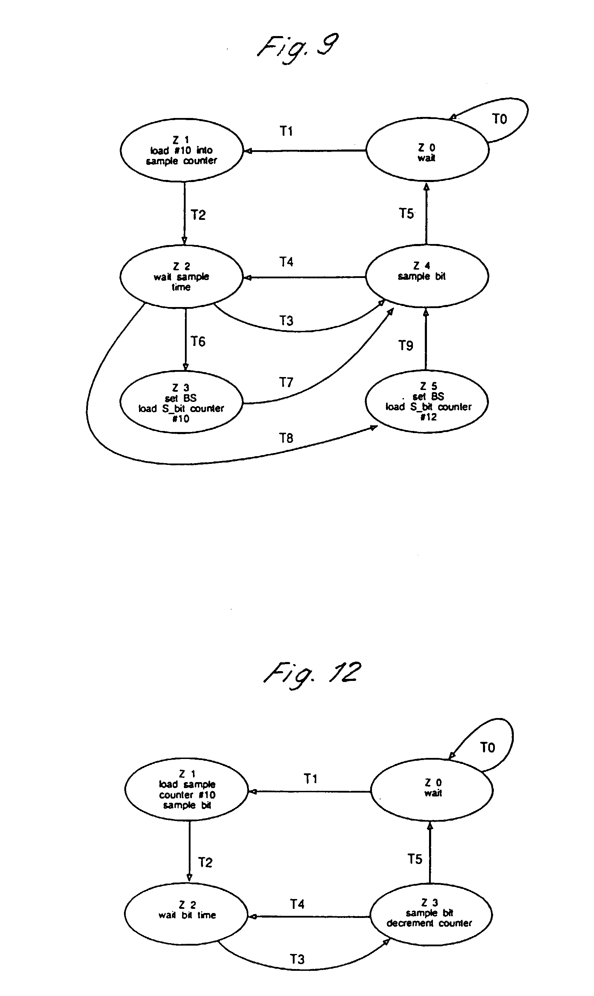

Die Abtasteinheit 10.1 des Sendeteils 10 hat die Aufgabe, die schon bezüglich des Taktsignals des Oszillators 4 synchronisierten Informationen (TxD sample) auf eine höhere Uebertragungsrate von 9938 Baud umzusetzen, was einer Signalelementdauer von 100.6 µs entspricht (siehe Fig. 5). Dieser Vorgang wird wie folgt anhand des Zustandsdiagrammes Fig. 9 für die Abtasteinheit näher erklärt:

Ausgangslage ist dabei wiederum der Zustand Z0, welcher die Ruhelage markiert. Erscheint nun eine positive Flanke auf einer Input_TxD_Sample-Leitung, so wird der Zustand Z0 verlassen und in den Zustand Z1 gesprungen (T1). Dort wird ein nicht dargestellter Sample-Zähler mit dem Wert 10 geladen und anschliesssend über T2 unbedingt in den Zustand Z2 gesprungen. In diesem Zustand wird nun entsprechend der Fig. 5 auf den ersten Abtastpunkt gewartet. Nach Ablauf dieser Samplezeit wird über T6 in Z3 gesprungen, wo ein nicht dargestelltes BS-Flip-Flop gesetzt wird, dessen Ausgang (BS-Leitung) dem Schaltwerk 12 meldet, dass jetzt ein vom Modulator 10.2 kommendes Bit zu senden ist. Gleichzeitig wird ein ebenfalls nicht dargestellter S_Bit-Zähler geladen, der zählt, wieviele Bits eines Charakters schon übermittelt wurden. Im nächsten Zustand Z4, der über T7 erreicht wird, wird dieses Bit abgetastet, der Sample-Zähler wird dekrementiert, und wieder anschliessend wird über T4 nach Z2 gesprungen, wo der nächste Samplezeitpunkt abgewartet wird. Nach Ablauf dieser Wartezeit wird über T3 zu Z4 gesprungen, wo das nächste Signalelement abgetastet wird. Die weiteren Signalelemente werden in der gleichen Art und Weise abgetastet (Pendeln zwischen Z2 und Z4). Sind alle Signalelemente abgetastet, kommt das Subsystem über T5 wieder in die Ruhelage zurück. Somit löst ein Startbit einen starren Samplevorgang aus, der autonom abläuft, bis alle Signalelemente abgetastet sind. Sobald der Modulator 10.2 alle Bits effektiv ausgesendet hat, setzt er das BS_Flip-Flop zurück. Damit wird dem Schaltwerk 12 gemeldet, dass keine weiteren Bits mehr zu senden sind und das Schaltwerk 12 den entsprechenden Zustandswechsel vollziehen kann.

Bei der Reduzierung der Uebertragungsgeschwindigkeit auf die nominelle Baudrate arbeitet eine - der Abtasteinheit 10.1 ähnliche - Abtasteinheit des Empfangsteils 11 (Fig. 4) analog nach dem Zustandsdiagramm Fig. 12.

Wird das System in Punkt-Punkt-Verbindungen eingesetzt, so wird die "Flow_bridge"-Betriebsart gewählt (Aktivierung des betreffenden Einganges der Steuereinheit 1) und damit anstelle des Wertes 10 der Wert 12 in den S_Bit-Zähler geladen. Damit erscheint dem System ein Charakter um zwei Bit verlängert, was die Implementation eines Flow_bridge-Mechanismus auf der Sendeseite darstellt. Auf tieferer Ebene wird während der letzten zwei Bits der Modulator 10.2 blockiert, falls während dieser Zeit nicht schon das neue Startbit eines weiteren Charakters auszusenden ist. Ist ein neuer Charakter auszusenden, so wird dieser nun entsprechend dem weitergeführten Raster synchronisiert und ausgesendet und somit nicht auf die positive Flanke der Input_TxD_ Sample-Leitung synchronisiert. Nach Erreichen des entsprechenden Zustandes Z5 über T8 und dessen Verlassen über T9 verläuft der Abtastprozess der weiteren Bits wie bisher beschrieben.

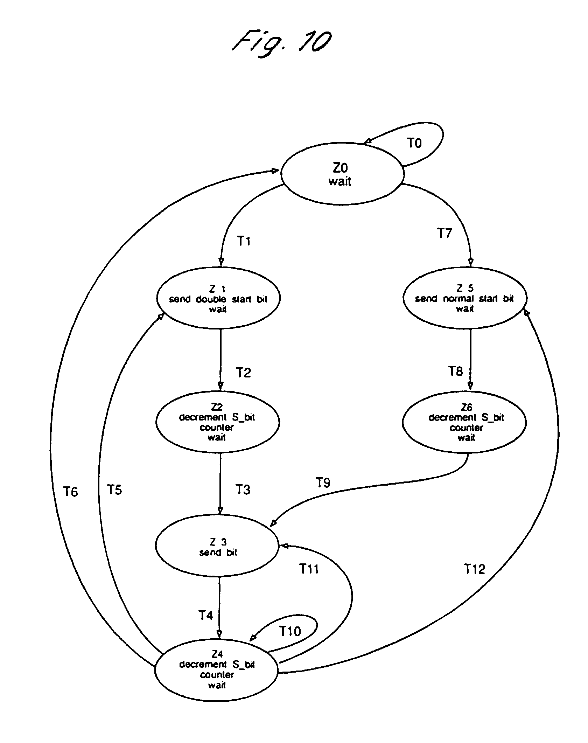

Gemäss Fig. 10 befindet sich der Modulator 10.2 in seiner Ausgangslage im Zustand Z0. Sobald nun ein Bit zu senden ist, wird dies dem Modulator 10.2 vom Schaltwerk 12 gemeldet. In Abhängigkeit von der Art der Kommunikationspartner (EKP resp. IKP) springt das System nun in den Zustand Z5 bzw. Z1, wo ein einfaches oder ein doppeltes Startbit ausgesendet wird. Ueber T2 bzw. T8 erreicht das System die Zustände Z2 bzw. Z6, wo der S_Bit-Zähler dekrementiert wird und anschliessend die Wartezeit abläuft. Nach dem Sprung über T3 bzw. T9 wird im Zustand Z3 das aktuelle Bit gesendet, entweder unmittelbar (wenn eine logische "1" dargestellt werden soll) oder über eine Wartezeit von 19.5 µs (beim Aussenden einer logischen "0"). Der S_Bit-Zähler wird nach dem Sprung über T4 (negative Flanke von S_Bit) im Zustand Z4 dekrementiert, und anschliessend wird wieder gewartet. Nach dieser Wartezeit kann das nächste Bit gesendet werden (T11, Z3). Am Ende eines Charakters werden noch zwei Pseudobits abgewartet, wenn die Flow-bridge aktiv ist (T10). Während dieser Zeit ist der Ausgang des Modulators 10.2 blockiert. Ist dieser Kommunikationspartner ein IKP und trifft während dieser Zeit das neue Startbit ein, so wird von Z4 über T5 in den Zustand Z1 gewechselt, wo das Startbit mit doppelter Länge gesendet wird. Falls der Kommunikationspartner ein EKP ist, wird über die Transition T12 in den Zustand Z5 gesprungen. Falls dieses Startbit nicht unmittelbar folgt, wird über T6 wiederum in den Zustand ZO als Ausganglage gesprungen. Damit ist die Flow-bridge aufgebrochen.

Der Multiplexer 10.3 hat die Aufgabe, entsprechend der Systemkonfiguration sicherzustellen, dass jeweils die richtige Signalquelle auf den Modulator 10.2 geschaltet wird. Signalquellen in diesem Sinne können sein: 1) Das über die Leitung TxD zugeführte Signal (eigentlicher Informationsfluss), 2) das unmittelbar über die Uebermittlungsstrecke empfangene Signal (loop-back Mode, wenn der Kommunikationspartner ein EKP ist und ein CSMA/CA-Protokoll angewendet wird), und 3) optional eine Geräteadresse, wenn der Empfänger über einen allgemeinen Aufruf von der Uebermittlungsstrecke her dazu aufgefordert wurde.

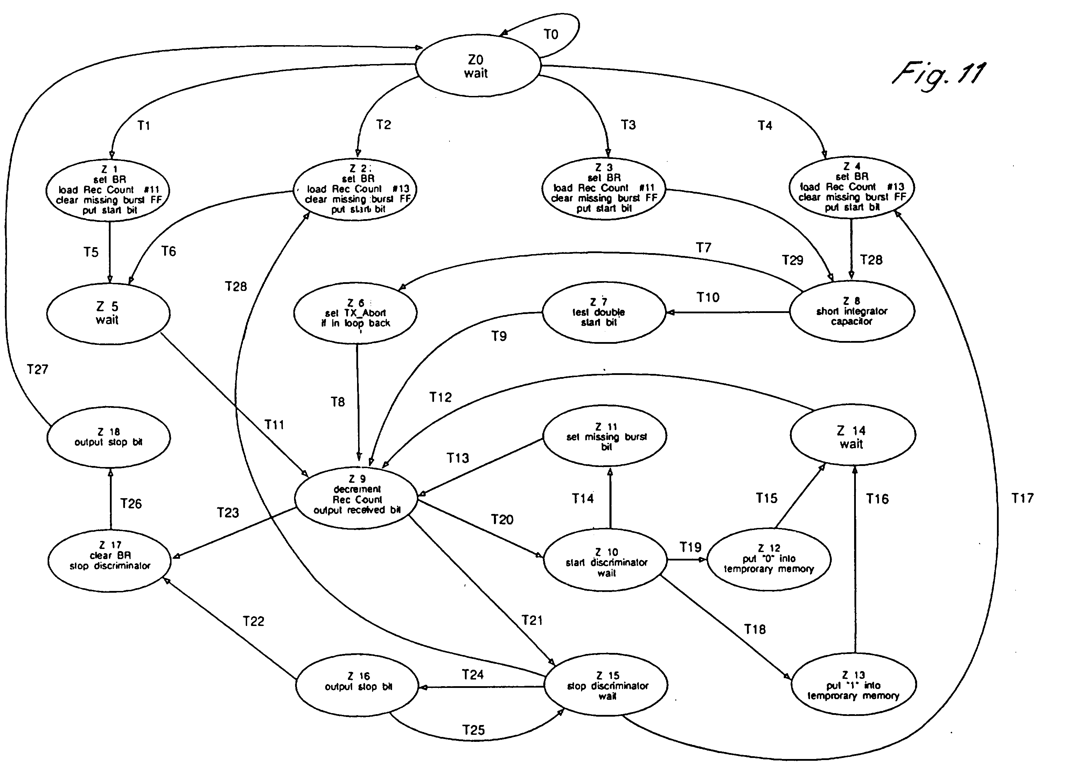

Die Funktionsweise des Empfangsteils 11 der Steuereinheit 1 ist anhand der Fig. 11 dargestellt. Ausgangslage ist der Zustand Z0. Ein Wechsel des Zustandes wird hier immer ausgelöst durch das Erscheinen der positiven Flanke eines Startbits, das vom Empfänger 3 über die Leitung In_RxD eingeführt wird. Falls die Einrichtung für die Flow bridge-Situation konfiguriert ist, wird im nächsten Zustand ein nicht dargestellter Empfangszähler mit dem Wert 13 geladen, sonst mit dem Wert 11. Ebenso wird ein nicht dargestelltes Flip-Flop, das meldet, dass während dem Empfang eines Charakters ein Schwingungspaket nicht detektiert wurde, zurückgesetzt. Ein BR-Flip-Flop wird gesetzt, welches dem Schaltwerk 12 meldet, dass ein Bit zu empfangen ist. Das Startbit selbst wird in einen nicht dargestellten Zwischenspeicher geladen. Sobald vom Schaltwerk 12 das R_Bit-Signal (positive Flanke) als Handshake-Signal zum BR-Signal ausgegeben wird, wird entsprechend der aktuellen Kommunikationspartner-Art (IKP oder EKP) in den Zustand Z5 bzw. Z8 gesprungen. Wenn der Kommunikationspartner IKP ist, wartet er im Zustand Z5. Ist er hingegen EKP, wird er jetzt im Zustand Z8 das In_RxD-Signal durch impulsartiges Entladen eines nicht dargestellten Kondensators rücksetzen und anschliessend warten. Falls nun bis Ende des halben Signalelementes (gemeldet durch die negative Flanke des R_Bit-Signals) der Kondensator durch ein Schwingungspaket wieder aufgeladen werden kann, wird dies durch die positive Flanke des In_RxD-Signals gemeldet. In diesem Falle wurde ein Startbit mit doppelter Länge erkannt, was zu einem Wechsel in den Zustand Z7 führt, wo das Ende des halben Signalelementes abgewartet wird. Der Kommunikationspartner hat in dieser Situation im Loopback-Mode das Signal unmittelbar wieder als Echo zurückzusenden. Dies entspricht einer direkten Verbindung zum IKP. Hat er jedoch bis Ende des halben Signalelementes keinen In_RxD-Impuls erhalten (einfache Länge des Startbits), so hat er das Startbit eines EKP detektiert und darf somit kein Signalecho zurücksenden; der Sender muss also blockiert werden. Dies geschieht durch Uebergang in den Zustand Z6. Das Kriterium, um in diesen Zustand zu gelangen (T7), ist das Erscheinen der negativen Flanke des R_Bit-Signals, die das Ende des halben Signalelementes markiert, bevor das In_RxD-Signal erscheint.

Wird dagegen noch vorher die positive Flanke des In_RxD-Signals erkannt, so erfolgt der Uebergang auf Z7, wo dann auf das Ende des halben Signalelementes gewartet wird. T8 ist ein unmittelbarer Sprung nach dem Blockieren des Senders im Loopback-Mode.

Im Zustand Z9 wird der Empfangszähler dekrementiert, das empfangene Bit ausgegeben und auf das nächste halbe Signalelement für den Empfang gewartet. Dieser Zeitpunkt wird durch das R_Bit-Signal vom Schaltwerk 12 gemeldet, was den Uebergang T20 in den Zustand Z10 veranlasst. In diesem Zustand wird ein nicht dargestellter Diskriminatorzähler initialisiert. Wird nun während der ersten Hälfte des halben Signalelementes die steigende Flanke des In_RxD-Signals detektiert, so wird ein Zwischenspeicher auf logisch "1" gesetzt und anschliessend das Ende des halben Signalelementes abgewartet (Z10, T18, Z13, T16, Z14). Falls der Diskriminatorzähler über die halbe Dauer des halben Signalelementes hinausgezählt hat und erst dann die positive Flanke des In_RxD-Signals erscheint, wird logisch "0" in den Zwischenspeicher geschrieben (Z10, T19, Z12, T15, Z14). Wenn auch in der zweiten Hälfte des Signalelementes kein In_RxD-Signal erschienen ist (Signalelement-Ende erscheint, bevor der Diskriminatorzähler durch das In_RxD-Signal gestoppt wurde), so wird der Zustand Z10 über T14 verlassen und das erwartete, aber fehlende Schwingungspaket wird im Zustand Z11 durch Setzen eines Flip-Flops markiert. Die steigende Flanke dieses Signals kann nach aussen als "Fehlermeldung" gemeldet werden. Die Zustände Z14 bzw. Z11 werden bei Ende des halben Signalelementes verlassen und es erfolgt der Sprung in den Zustand Z9. Dort wird das im Zwischenspeicher befindliche Bit ausgegeben und der Empfangszähler dekrementiert. In den Zuständen Z9, Z10, Z12 oder Z13, sowie Z14 oder Z11, Z9 werden nun die übrigen Bits auf analoge Weise empfangen.

Falls das letzte Bit empfangen wurde und der Kommunikationspartner im Flow-bridge-Mode konfiguriert ist, wird über T21 in den Zustand Z15 gewechselt, wo der Diskriminator gestoppt wird. Es werden nun noch zwei Pseudobits zur Ueberbrückung "empfangen", und falls in dieser Zeit ein neues Startbit empfangen wird, erfolgt wieder ein Wechsel in den ensprechenden Zustand Z2 bzw. Z4 (T17 bzw. T28). Ist das Startbit in dieser Zeitdauer nicht angekommen, so wird angenommen, dass nicht nur das Charakterende, sondern das Messageende empfangen wurde und somit der Kommunikationspartner wieder in den Ursprungszustand gehen kann, wo er die Kommunikationspartner-Art (EKP, IKP) entsprechend der dann vorliegenden aktuellen Situation wieder neu wählen kann. Dieser Uebergang erfolgt über T22, Z17, wo das BR-Signal zurückgesetzt wird, T26, Z18 (Stopbit wird "ausgegeben") und T27.

Entsteht nun bei diesem empfangenden Kommunikationspartner während dieser Zeitdauer (Verweilen im Zustand Z15) selbst ein Uebermittlungsbedarf, so synchronisiert er den zu übermittelnden Charakter bezüglich des durch die zwei Pseudobits weitergeführten Rasters und nicht bezüglich des Startbits des Charakters. Damit ist sichergestellt, dass trotz Existenz einer durch die Empfangsschaltung bedingten Verzögerung tv (Fig. 7) - während welcher der Beginn einer Uebertragung nicht erkennbar ist - eine Synchronisation erfolgt und nicht beide Kommunikationspartner sich quasi gleichzeitig als initiierende Kommunikationspartner markieren und ihr Startbit gleichzeitig senden.

Obwohl beim vorstehend beschriebenen Ausführungsbeispiel als Uebertragungsmedium Infrarotlicht angenommen wurde, ist es ohne weiteres klar, dass dasselbe Verfahren und die grundsätzlich gleichen Einrichtungen auch bei Funkübertragung (selbstverständlich mit entsprechenden Sendern und Empfängern) anwendbar sind. Das vorgeschlagene Verfahren kann auch bei anderen Uebertragungsmedien angewendet werden, die - wie beispielsweise wellenleiter - nur für Half-Duplex-, nicht aber für Full-Duplex-Betrieb geeignet sind.

## Patentansprüche

1. Verfahren zur bidirektionalen Informationsübertragung, wobei die Informationsübertragung zwischen Kommunikationspartnern (KP1, KP2) durchgeführt wird, die je Sender und Empfänger aufweisen, und wobei die Informationen bitseriell übertragen werden und die Richtung der Informationsflüsse umschaltbar ist,
dadurch **gekennzeichnet**,
- dass die in beiden Richtungen zu übertragenden Informationsflüsse auf die gleiche Uebertragungsgeschwindigkeit gebracht werden,
- dass der zeitliche Abstand (ta) zwischen den Anfängen der aufeinanderfolgenden Bits eines Informationsflusses während der Uebertragung in zwei zeitlich gleiche Hälften (tb, tc) aufgeteilt wird, wobei die Bits während der ersten Hälfte (tb) übertragen werden,
- dass ein sendender Kommunikationspartner unmittelbar nach dem Senden eines Bits auf Empfang umschaltet,
- dass ein empfangender Kommunikationspartner nach Empfang eines Bits und bei Vorliegen von Uebermittlungsbedarf auf Senden umschaltet,
- und dass die gesendeten Bits des einen Informationsflusses jeweils in den zweiten Hälften (tc) des entgegengesetzt gerichteten Informationsflusses übertragen werden.

2. Verfahren nach Anspruch 1, dadurch gekennzeichnet,
- dass ein bei einem ersten Kommunikationspartner (KP1) mit einer ersten Geschwindigkeit ankommender Informationsfluss durch eine erste Abtastung für die Uebertragung auf eine zweite Geschwindigkeit gebracht wird, die höher ist als die erste Geschwindigkeit,
- und dass der mit der zweiten Geschwindigkeit an einen zweiten Kommunikationspartner (KP2) gesendete Informationsfluss nach Empfang durch eine zweite Abtastung auf eine dritte Geschwindigkeit reduziert wird, die kleiner ist als die zweite schwindigkeit.

3. Verfahren nach Anspruch 2, dadurch gekennzeichnet, dass die zweite Geschwindigkeit, mit welcher der Informationsfluss übertragen wird, einer Uebertragungsrate von 9938 Baud entspricht, wobei der zeitliche Abstand (ta) 100,6 µs beträgt und die zeitlich gleichen Hälften (tb, tc) je 50,3 µs betragen.

4. Verfahren nach Anspruch 2, dadurch gekennzeichnet, dass die zweite Geschwindigkeit des Informationsflusses aus der ersten Geschwindigkeit dadurch abgeleitet wird, dass ein erstes Bit eines Charakters an seinem Ende und ein letztes Bit an seinem Anfang abgetastet wird.

5. Verfahren nach Anspruch 2, dadurch gekennzeichnet, dass die dritte Geschwindigkeit des Informationsflusses aus der zweiten Geschwindigkeit dadurch abgeleitet wird, dass ein letztes Bit eines empfangenen Charakters an seinem Ende noch abgetastet werden kann, wenn das erste Bit an seinem Anfang abgetastet wird.

6. Verfahren nach Anspruch 1, dadurch gekennzeichnet,
- dass beim sendenden und beim empfangenden Kommunikationspartner je ein rechteckförmiges Sendefreigabesignal (En Tx1, En Tx2) erzeugt wird,
- dass das Sendefreigabesignal (En Tx1) beim sendenden Kommunikationspartner (KP1) in Phase mit dem zu übertragenden Informationsfluss (b) ist, wobei die abfallenden Flanken jeweils den zeitlichen Abstand (ta) in die zwei gleichen Hälften (tb, tc) teilen sowie das Senden sperren und den Empfang freigeben,
- und dass das Sendefreigabesignal (En Tx2) beim empfangenden Kommunikationspartner (KP2) derart vom empfangenen Signal (In_RxD) abgeleitet ist, dass dessen steigende Flanken erst nach einer bestimmten Synchronisationszeit nach Erscheinen des empfangenen Signals (In_RxD) auftreten, wobei die steigenden Flanken gleichzeitig mit den abfallenden Flanken beim sendenden Kommunikationspartner (KP1) auftreten sowie den Empfang sperren und das Senden freigeben.

7. Verfahren nach Anspruch 6, dadurch gekennzeichnet, dass die Synchronisationszeit der ersten Hälfte (tb) des zeitlichen Abstandes (ta), vermindert um eine beim Empfang entstehende Verzögerung (tv), entspricht.

8. Verfahren nach Anspruch 6, dadurch gekennzeichnet, dass die Sendefreigabesignale (En Tx1, En Tx2) bei einem aus mehreren aufeinanderfolgenden Charakteren bestehendem Informationsfluss während einer bestimmten Zeitdauer über die eigentliche Charakterlänge hinaus periodisch weitergeführt werden und weitere zu übertragende Charaktere bezüglich dieser Sendefreigabesignale (En Tx1, En Tx2) synchronisiert werden.

9. Verfahren nach Anspruch 8, dadurch gekennzeichnet, dass die bestimmte Zeitdauer gleich dem doppelten zeitlichen Abstand (ta) ist und der Verlängerung eines Charakters um zwei Bits entspricht.

10. Verfahren nach Anspruch 1, dadurch gekennzeichnet, dass die Bits in Form von durch Pulsburstpositions-Modulation modulierten Impulsen übertragen werden.

11. Verfahren nach Anspruch 10, dadurch gekennzeichnet,
- dass die Impulse aus Schwingungspaketen bestehen, die kürzer sind als die erste Hälfte (tb) des zeitlichen Abstandes (ta),
- dass das Schwingungspaket für die Kennzeichnung von logisch "1" unmittelbar am Anfang des zeitlichen Abstandes (ta) ausgesendet wird,
- und dass das Schwingungspaket für die Kennzeichnung von logisch "0" um eine bestimmte Verzögerungszeit nach dem Anfang des zeitlichen Abstandes (ta) ausgesendet wird.

12. Verfahren nach Anspruch 11, dadurch gekennzeichnet, dass die Schwingungsfrequenz 460,8 kHz beträgt und die Schwingunspakete aus neun Schwingungen bestehen, wobei ein Schwingungspaket eine Dauer von 19,5 µs aufweist.

13. Verfahren nach Anspruch 11, dadurch gekennzeichnet, dass die bestimmte Verzögerungszeit 20 µs beträgt.

14. Verfahren nach Anspruch 1, dadurch gekennzeichnet, dass die Informationen mittels Infrarotlicht übertragen werden.

15. Verfahren nach Anspruch 1, dadurch gekennzeichnet, dass die Informationen mittels Funkwellen übertragen werden.

16. Verfahren nach Anspruch 1, dadurch gekennzeichnet, dass die Informationen mittels Lichtwellenleitern übertragen werden.

17. Einrichtung zur Durchführung des Verfahrens nach Anspruch 1, dadurch gekennzeichnet dass,
- mindestens zwei Kommunikationspartner (KP1, KP2), die je einen Sender **(2)** und einen Empfänger **(3)** aufweisen, die Mittel umfassen die in beiden Richtungen zu übertragende Informationsflüsse auf gleiche Übertragungsgeschwindigkeit zu bringen, vorgesehen sind,
- je Kommunikationspartner (KP1, KP2) eine Steuereinheit **(1)** vorgesehen ist, die über eine erste Leitung (Out_TxD) mit dem Sender **(2)** und über eine zweite Leitung (In_RxD) mit dem Empfänger **(3)** verbunden ist,
- die Steuereinheit **(1)** mit einem Oszillator **(4)** in Verbindung steht und darin Mittel vorgesehen sind, die bewirken, dass ein sendender Kommunikationspartner unmittelbar nach dem Senden eines Bits auf Empfang umschaltet und ein empfangender Kommunikationspartner nach Empfang eines Bits und bei Vorliegen von Übermittlungsbedarf auf Senden umschaltet.
- die Steuereinheit **(1)** Mittel enthält, die dafür sorgen, dass der zeitliche Abstand (ta) zwischen den Anfängen aufeinanderfolgender Bits eines Informationsflusses während der Übertragung in zwei zeitlich gleiche Hälften (tb, tc) aufgeteilt wird, wobei die Bits während der ersten Hälfte übertragen werden
- und dass ein Spannungspegelwandler (5) vorgesehen ist, der über eine dritte Leitung (Input_TxD) und eine vierte Leitung (Output_RxD) an der Steuereinheit (1) angeschlossen ist, und der über eine fünfte Leitung (TxD) die zu sendenden Informationen erhält und über eine sechste Leitung (RxD) die empfangenen Informationen abgibt.

18. Einrichtung nach Anspruch 17, dadurch gekennzeichnet,
- dass die Steuereinheit (1) einen Sendeteil (10), einen Empfangsteil (11) und ein Schaltwerk (12) aufweist, die miteinander verbunden sind,
- und dass der Sendeteil (10) eine Abtasteinheit (10.1), einen Modulator (10.2) und einen Multiplexer (10.3) aufweist,
- wobei das Schaltwerk (12) das Zusammenwirken des Sendeteils (10) und des Empfangsteils (11) beim Senden bzw. Empfangen von Informationen koordiniert.

19. Einrichtung nach Anspruch 17, dadurch gekennzeichnet, dass zum Zwecke der Informationsübertragung mittels Infrarotlicht die Sender **(2)** Leuchtdioden und die Empfänger **(3)** Photodioden aufweisen, und dass der Sender **(2)** eine Treiberstufe **(6)** aufweist, der ein Leistungs-FET **(7)** nachgeschaltet ist, wobei im Ausgangskreis zwei Leuchtdioden **( 8, 9 )** angeordnet sind und der Eingang der Treiberstufe **(6)** über eine erste Leitung (Out_TxD) mit der Steuereinheit **(1)** verbunden ist.

## Claims

1. Process of bi-directional information transmission in which the information transmission is carried out between communication partners (KP1, KP2) having each a transmitter and a receiver, and wherein the information is bit-serially transmitted and the direction of information flow is switchable, **characterised in that**
- information flows to be transmitted in both directions are set at the same transmission speed;
- the temporal space (ta) between the beginning of successive bits of an information flow during transmission is divided into two temporally identical halves (tb, tc), and the bits are transmitted during the first half (tb);
- a transmitting communication partner switches over to receive directly after transmission of a bit;
- a receiving communication partner switches over to transmit after receive of a bit and in the presence of a pending transmission; and
- transmitted bits of the one information flow are transmitted in the respective second halves (tc) of an oppositely directed information flow.

2. Process according to Claim 1, **characterised in that**
- an information flow arriving at a first communication partner (KP1) at a first speed is set by a first scan for transmission to a second speed which is higher than the first speed; and
- the information flow which has been transmitted at the second speed to a second communication partner (KP2) is on receipt reduced by a second scan to a third speed which is lower than the second speed.

3. Process according to Claim 2, **characterised in that** the second speed at which the information flow is transmitted corresponds with a transmission rate of 9938 Baud, and the temporal space (ta) is 100.6 µs, and the temporally equal halves (tb, tc) are each 50.3 µs.

4. Process according to Claim 2, **characterised in that** the second speed of the information flow is derived from the first speed in that a first bit of a character is scanned at its end and a last bit at its beginning.

5. Process according to Claim 2, **characterised in that** the third speed of the information flow is derived from the second speed in that a last bit of a received character can still be scanned at its end when the first bit is scanned at its beginning.

6. Process according to Claim 1, **characterised in that**
- a respective rectangular transmit enable signal (En Tx1, EN Tx2) is generated at the transmitting and the receiving communication partner;
- the transmit enable signal (En Tx1) at the transmitting communication partner (KP1) is in phase with the information flow to be transmitted (b), and the decreasing flanks divide the respective temporal space (ta) in the two equal halves (tb, tc) and disable transmit and enable receive; and
- the transmit enable signal (En Tx2) at the receiving communication partner (KP2) is deviated from the received signal (In_RXD) in such a manner that its increasing flanks occur only after a specified synchronisation period after the received signal (In_RXD) has appeared, and the increasing flanks occur simultaneously with the decreasing flanks at the transmitting communication partner (KP1) and disable receive and enable transmit.

7. Process according to Claim 6, **characterised in that** the synchronisation period corresponds with the first half (tb) of the temporal space (ta) minus a delay(tv) which occurs on receive.

8. Process according to Claim 6, **characterised in that** the transmit enable signals (En Tx1, En Tx2) in an information flow composed of a plurality of successive characters is periodically continued beyond an actual character length during a specified temporal duration, and further characters to be transmitted are synchronised relative to these transmit enable signals (En Tx1, EN Tx2).

9. Process according to Claim 8, **characterised in that** the specified temporal duration equals twice the temporal space (ta) and corresponds with the extension of a character by two bits.

10. Process according to Claim 1, **characterised in that** the bits are transmitted in the form of pulses modulated by pulse-burst position modulation.

11. Process according to Claim 10, **characterised in that**
- the pulses are composed of oscillation packets which are shorter than the first half (tb) of the temporal space (ta);
- the oscillation packet for characterisation of logic "1" is transmitted directly at the start of the temporal space (ta); and
- the oscillation packet for characterisation of logic "0" is transmitted by a specified delay period after the start of the temporal space (ta).

12. Process according to Claim 11, **characterised in that** the oscillation frequency is 460.8 kHz, and the oscillation packets are composed of nine oscillations, and an oscillation packet has a duration of 19.5 µs.

13. Process according to Claim 11, **characterised in that** the specified delay time is 20 µs

14. Process according to Claim 1, **characterised in that** the informations are transmitted by way of infrared light.

15. Process according to Claim 1, **characterised in that** the informations are transmitted by way of radio waves.

16. Process according to Claim 1, **characterised in that** the informations are transmitted by way of fibre optics.

17. Device for carrying out the process according to Claim 1, **characterised in that**
- at least two communication partners (KP1, KP2) are provided, each comprising one transmitter (2) and one receiver (3) and incorporating means for bringing bi-directionally transmitted information flows to equal transmission speeds;
- for each communication partner (KP1, KP2) is provided one control unit (1) which is connected via a first line (Out_TXD) to the transmitter (2) and via a second line (In_RXD) to the receiver (3);
- the control unit (1) is connected to an oscillator (4) with means provided which cause a transmitting communication partner to switch over to receive directly after transmission of a bit and a receiving communication partner to switch over to transmit after receive of a bit and transmission demand;
- the control unit (1) is provided with means to ensure that the temporal space (ta) between the start of successive bits of an information flow during transmission is divided into two temporally equal halves (tb, tc) and that the bits are transmitted during the first half; and
- a potential level converter (5) is provided which is connected via a third line (Input_TXD) and a fourth line (Output_RXD) to a control unit (1) and which receives information to be transmitted via a fifth line (TxD) and transmits received information via a sixth line (RxD).

18. Device according to Claim 17, **characterised in that**
- the control unit (1) comprises a transmit section (10), a receive section (11) and a circuit (12) which are interconnected;
- the transmit section (10) comprises a scanning unit (10.1), a modulator (10.2) and a multiplexer (10.3); and
- the circuit (12) co-ordinates the co-operation of the transmit section (10) and the receive section (11) during transmission or receiving of information.

19. Device according to Claim 17, **characterised in that,** for the purpose of transmitting information by way of infrared light, the transmitters (2) have light-emitting diodes and the receivers (3) photo diodes, and the transmitter (2) has a driver stage (6) with an operational FET (7) downstream, and two light-emitting diodes (8, 9) are arranged in the output circuit, and the input of the driver stage (6) is connected via a first line (Out_TxD) to the control unit (1).

## Revendications

1. Procédé pour une transmission bidirectionnelle d'informations, dans lequel la transmission d'informations est effectuée entre des partenaires de communication (KP1, KP2) qui comportent chacun un émetteur et un récepteur , et dans lequel les informations sont transmises par bits en série et le sens du flux d'information est commutable, caractérisé en ce que
- les flux d'informations à transmettre dans les deux sens sont amenés à la même vitesse de transmission,
- l'écart de temps (ta) entre les débuts des bits successifs d'un flux d'informations pendant la transmission est divisé en deux moitiés de durées égales (tb, tc), les bits étant transmis pendant la première moitié (tb),
- un partenaire de communication en train d'émettre commute sur réception immédiatement après l'émission d'un bit,
- un partenaire de communication en train de recevoir commute sur émission après la réception d'un bit et en présence d'un besoin de transmission,
- et les bits envoyés d'un flux d'informations sont transmis chaque fois pendant les deuxièmes moitiés (tc) du flux d'informations dirigé en sens opposé.

2. Procédé selon la revendication 1, caractérisé en ce que
- un flux d'informations arrivant chez un premier partenaire de communication (KP1) avec une première vitesse est amené au moyen d'une première détection à une deuxième vitesse pour la transmission qui est supérieure à la première vitesse,
- et le flux d'informations envoyé à la deuxième vitesse à un deuxième partenaire de communication (KP2) après réception est réduit, au moyen d'une deuxième détection, à une troisième vitesse qui est inférieure à la deuxième vitesse.

3. Procédé selon la revendication 2, caractérisé en ce que la deuxième vitesse avec laquelle le flux d'informations est transmis correspond à une cadence de transmission de 9938 bauds, l'intervalle de temps (ta) s'élèvant à 100,6 µs et les deux moitiés de durées égales (tb, tc) valant chacune 50,3 µs.

4. Procédé selon la revendication 2, caractérisé en ce que la deuxième vitesse du flux d'informations est dérivée de la première vitesse de manière qu'un premier bit d'un caractère soit détecté à sa fin et qu'un dernier bit soit détecté à son début.

5. Procédé selon la revendication 2, caractérisé en ce que la troisième vitesse du flux d'informations est dérivée de la deuxième vitesse de manière qu'un dernier bit d'un caractère reçu puisse encore être détecté à sa fin quand le premier bit est détecté à son début.

6. Procédé selon la revendication 1, caractérisé en ce que
- chez un partenaire de communication en train d'émettre et un partenaire en train de recevoir, un signal d'autorisation à émettre (En Tx1, En Tx2) de forme rectangulaire est produit,
- le signal d'autorisation à émettre (En Tx1) chez le partenaire de communication en train d'émettre (KP1) est en phase avec le flux d'informations à transmettre (b), les flancs descendants divisant chaque intervalle de temps (ta) en deux moitiés égales (tb, tc) et bloquant en même temps l'émission et autorisent la réception,
- et le signal d'autorisation à émettre (En Tx2) chez le partenaire de communication en train de recevoir (KP2) est dérivé du signal reçu (In_RXD), de sorte que ses flancs ascendants apparaissent seulement après une durée déterminée de synchronisation après l'apparition du signal reçu (In_RXD), les flancs ascendants apparaissant en même temps que les flancs descendants chez le partenaire de communication en train d'émettre (KP1) et bloquant en même temps la réception et autorisent l'émission.

7. Procédé selon la revendication 6, caractérisé en ce que la durée de synchronisation correspond à la première moitié (tb) de l'intervalle de temps (ta), diminuée d'un retard apparaissant à la réception (tv).

8. Procédé selon la revendication 6, caractérisé en ce que les signaux d'autorisation à émettre (En Tx1, En Tx2) dans un flux d'informations consistant en plusieurs caractères successifs, sont prolongés périodiquement pendant une durée déterminée pour s'étendre au delà de la longueur propre d'un caractère, et que d'autres caractères à transmettre sont synchronisés par rapport à ces signaux d'autorisation à émettre (En Tx1, En Tx2).

9. Procédé selon la revendication 8, caractérisé en ce que la durée déterminée est égale à deux fois l'intervalle de temps (ta) et que la prolongation d'un caractère correspond à deux bits.

10. Procédé selon la revendication 1, caractérisé en ce que les bits sont transmis sous la forme d'impulsions modulées par modulation de position de salve d'impulsions.

11. Procédé selon la revendication 10, caractérisé en ce que
- les impulsions consistent en trains d'oscillations qui sont plus courts que la première moitié (tb) de l'intervalle de temps (ta),
- le train d'oscillations pour l'identification d'un "1" logique est envoyé immédiatement au début de l'intervalle de temps (ta),
- et le train d'oscillations pour l'identification d'un "0" logique est envoyé avec une certaine durée de retard après le début de l'intervalle de temps (ta).

12. Procédé selon la revendication 11, caractérisé en ce que la fréquence d'oscillation est de 460,8 kHz et que les trains d'oscillations consistent en neuf oscillations dans lesquelles un train d'oscillations présente une durée de 19,5 µs.

13. Procédé selon la revendication 11, caractérisé en ce que la durée déterminée de retard est de 20 µs.

14. Procédé selon la revendication 1, caractérisé en ce que les informations sont transmises au moyen d'un rayonnement infrarouge.

15. Procédé selon la revendication 1, caractérisé en ce que les informations sont transmises au moyen d'ondes radio.

16. Procédé selon la revendication 1, caractérisé en ce que les informations sont transmises au moyen de guides d'ondes lumineuses.

17. Dispositif pour la mise en oeuvre du procédé selon la revendication 1, caractérisé en ce que
- au moins deux partenaires de communication (KP1, KP2) sont prévus, qui comprennent chacun un émetteur (2) et un récepteur (3), et qui comportent des moyens pour amener les flux d'informations à transmettre dans les deux sens à une même vitesse de transmission,
- chaque partenaire de communication (KP1, KP2) est muni d'un dispositif de commande (1) qui est relié par l'intermédiaire d'une première ligne (Out_TxD) avec l'émetteur (2) et par l'intermédiaire d'une deuxième ligne (In_RXD) avec le récepteur (3),
- le dispositif de commande (1) est en liaison avec un oscillateur (4) et des moyens sont prévus qui fonctionnent en sorte qu'un partenaire de communication en cours d'émission commute sur réception immédiatement après l'émission d'un bit et qu'un partenaire de communication en cours de réception commute sur émission après réception d'un bit et en présence d'un besoin de transmission,
- le dispositif de commande (1) comprend des moyens qui font en sorte que l'intervalle de temps (ta) entre les débuts de bits successifs d'un flux d'informations est divisé pendant la transmission en deux moitiés de durées égales (ta, tb), les bits étant transmis pendant la première moitié,
- et un convertisseur de niveau de tension (5) est prévu, qui est relié par l'intermédiaire d'une troisième ligne (Input_TXD) et d'une quatrième ligne (Output_RXD) au dispositif de commande (1), et qui reçoit les informations à envoyer par l'intermédiaire d'une cinquième ligne (TxD) et délivre les informations reçues par l'intermédiaire d'une sixième ligne (RxD).

18. Dispositif selon la revendication 17, caractérisé en ce que
- le dispositif de commande (1) comprend une partie d'émission (10), une partie de réception (11) et un dispositif de commutation (12) qui sont reliés les uns avec les autres,
- et la partie d'émission (10) comprend un module de détection (10.1), un modulateur (10.2) et un multiplexeur (10.3),
- dans lequel le dispositif de commutation (12) coordonne la coopération de la partie d'émission (10) et de la partie de réception (11) lors de l'émission ou de la réception d'informations.

19. Dispositif selon la revendication 17, caractérisé en ce que, en vue de la transmission d'informations au moyen d'un rayonnement infrarouge, l'émetteur (2) comprend des diodes électroluminescentes et le récepteur (3) des photodiodes, et que l'émetteur (2) comprend un étage d'attaque (6) qui est raccordé à un transistor de puissance à effet de champ (7), et dans lequel, dans le circuit de sortie, deux diodes électroluminescentes (8, 9) sont disposées et l'entrée de l'étage d'attaque (6) est reliée par l'intermédiaire d'une première ligne (Out_TxD) au dispositif de commande (1).
